# EUROPEAN PATENT APPLICATION

(11) **EP 3 109 460 A1**
(43) Date of publication of application: **28.12.2016**
(21) Application number: 16174043.6
(22) Date of filing: 10.06.2016
(51) Int. Cl.: F03D 1/06, B29C 70/44, B29C 70/00

(54) **STRUCTURAL SUPPORT MEMBERS WITH DIFFERENT AREAL WEIGHT FIBER REINFORCING LAYERS FOR WIND TURBINE ROTOR BLADES**

(30) Priority: 26.06.2015 US 201514751818
(71) Applicant: General Electric Company, Schenectady, NY 12345 (US)
(72) Inventor: YARBROUGH, Aaron A., Greenville, SC South Carolina 29615 (US); RIAHI, Amir, Greenville, SC South Carolina 29615 (US); CARUSO, Christopher Daniel, Greenville, SC South Carolina 29615 (US); ALBERT, Bensely, Greenville, SC South Carolina 29615 (US)
(74) Representative: Bedford, Grant Richard

(57) **Abstract**

Structural support members 60 include a plurality of fiber reinforcing layers 76 positioned on top of one another, wherein a plurality of intermediate fiber reinforcing layers 76 are disposed between a top fiber reinforcing layer and a bottom fiber reinforcing layer, and wherein at least one of said fiber reinforcing layers 76 comprises a first areal weight, and wherein at least one of said fiber reinforcing layers 76 comprises a second areal weight different than the first areal weight. The structural support members 60 further include a resin infused throughout the plurality of fiber reinforcing layers 76.

## Description

The subject matter disclosed herein relates generally to wind turbine rotor blades and, more specifically, structural support members with different weight fiber reinforcing layers.

Wind power is considered one of the cleanest, most environmentally friendly energy sources presently available, and wind turbines have gained increased attention in this regard. A modem wind turbine typically includes a tower, generator, gearbox, nacelle, and one or more rotor blades connected to a hub either directly or through a pitch bearing. The rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

Rotor blades in general are increasing in size, in order to become capable of capturing increased kinetic energy. However, the weight of the rotor blade may become a factor as its size continues to increase. Moreover, these components must be connected to the rotor blade in a secure and sustainable manner. However, structural support members comprising fiber reinforcing layers and used to support these components may experience additional resin infusion considerations.

Accordingly, alternative wind turbine rotor blades with structural support members having different areal weight fiber reinforcing layers would be welcome in the art.

In one embodiment, a structural support member for a wind turbine rotor blade is disclosed. The structural support member includes a plurality of fiber reinforcing layers positioned on top of one another, wherein a plurality of intermediate fiber reinforcing layers are disposed between a top fiber reinforcing layer and a bottom fiber reinforcing layer, and wherein at least one of said fiber reinforcing layers comprises a first areal weight, and wherein at least one of said fiber reinforcing layers comprises a second areal weight different than the first areal weight. The structural support member further includes a resin infused throughout the plurality of fiber reinforcing layers.

In another embodiment, a wind turbine rotor blade is disclosed. The wind turbine rotor blade includes a spar cap disposed within the rotor blade that extends for at least a portion of a rotor blade span length, the spar cap comprising a plurality of fiber reinforcing layers positioned on top of one another, wherein a plurality of intermediate fiber reinforcing layers are disposed between a top fiber reinforcing layer and a bottom fiber reinforcing layer, and wherein at least one of said fiber reinforcing layers comprises a first areal weight, and wherein at least one of said fiber reinforcing layers comprises a second areal weight different than the first areal weight, and, a resin infused throughout the plurality of fiber reinforcing layers. The wind turbine rotor blade further includes an airfoil structure at least partially supported by the spar cap.

In yet another embodiment, a method for manufacturing a structural support member is disclosed. The method includes positioning a plurality of fiber reinforcing layers on top of one another, wherein a plurality of intermediate fiber reinforcing layers are disposed between a top fiber reinforcing layer and a bottom fiber reinforcing layer, and wherein at least one of said fiber reinforcing layers comprises a first areal weight, and wherein at least one of said fiber reinforcing layers comprises a second areal weight different than the first areal weight. The method further includes infusing a resin throughout the plurality of fiber reinforcing layers.

Various features provided by the embodiments discussed herein will be more fully understood in view of the following detailed description, in conjunction with the drawings.

The embodiments set forth in the drawings are illustrative and exemplary in nature and not intended to limit the inventions defined by the claims. The following detailed description of the illustrative embodiments can be understood when read in conjunction with the following drawings, where like structure is indicated with like reference numerals and in which:
FIG. 1 is a perspective view of a wind turbine having one or more rotor blades that may incorporate an aerodynamic root adapter according to one or more embodiments shown or described;
FIG. 2 is a perspective view of a rotor blade of the wind turbine illustrated in FIG. 1 according to one or more embodiments shown or described herein;
FIG. 3 is a cross section view of a rotor blade according to one or more embodiments shown or described herein;
FIG. 4 is a cross section view of a structural support member for a rotor blade comprising a plurality of fiber reinforcing layers according to one or more embodiments shown or described herein;
FIG. 5 is cross section view of another structural support member for a rotor blade comprising a plurality of fiber reinforcing layers according to one or more embodiments shown or described herein;
FIG. 6 is a cross section view of yet another structural support member for a rotor blade comprising a plurality of fiber reinforcing layers according to one or more embodiments shown or described herein;
FIG. 7. is a cross section view of yet another structural support member for a rotor blade comprising a plurality of fiber reinforcing layers according to one or more embodiments shown or described herein; and
FIG. 8 illustrates an exemplary method for manufacturing a structural support member according to one or more embodiments shown or described herein.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

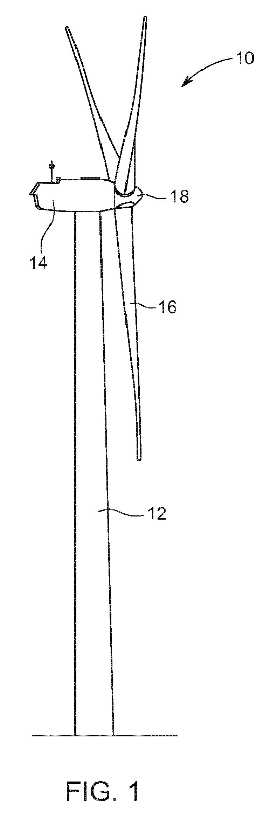

Referring now to FIG. 1 a wind turbine 10 of conventional construction is illustrated. The wind turbine 10 includes a tower 12 with a nacelle 14 mounted thereon. A plurality of rotor blades 16 are mounted to a rotor hub 18, which is in turn connected to a main flange that turns a main rotor shaft. Depending on the configuration of the wind turbine 10, the plurality of rotor blades 16 can, for example, be mounted to the rotor hub 18 indirectly through a pitch bearing (not illustrated) or any other operable connection technique. The wind turbine power generation and control components are housed within the nacelle 14. The view of Fig. 1 is provided for illustrative purposes only to place the present invention in an exemplary field of use. It should be appreciated that the invention is not limited to any particular type of wind turbine configuration.

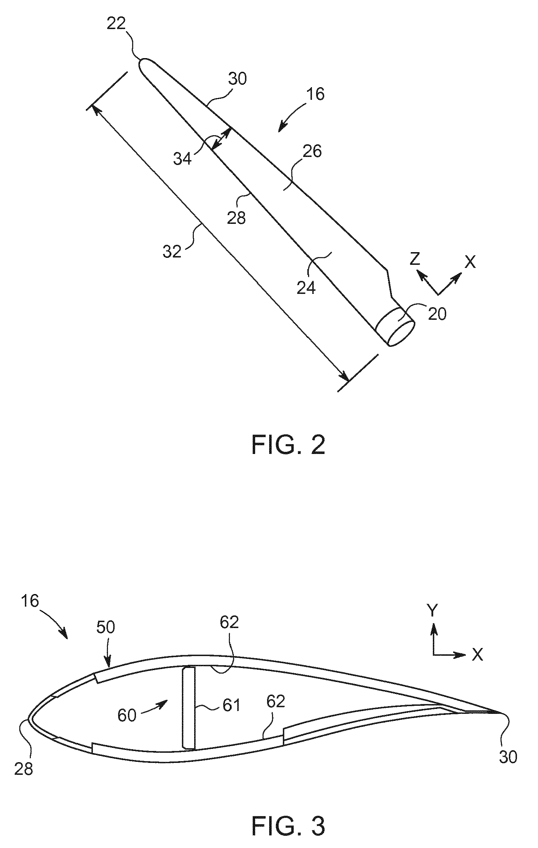

Referring now to FIG. 2, a perspective view of a rotor blade 16 is illustrated. The rotor blade 16 can include a root end 20 for mounting the rotor blade 16 to a mounting flange (not illustrated) of the wind turbine hub 18 (illustrated in FIG. 1) and a tip end 22 disposed opposite to the root end 20. The rotor blade 16 may comprise a pressure side 24 and a suction side 26 extending between a leading edge 28 and a trailing edge 30. In addition, the rotor blade 16 may include a span 32 defining the total length between the root end 20 and the tip end 22. The rotor blade 16 can further comprise a chord 34 defining the total length between the leading edge 28 and the trailing edge 30. It should be appreciated that the chord 34 may vary in length with respect to the span 32 as the rotor blade 16 extends from the root end 20 to the tip end 22.

The rotor blade 16 may define any suitable aerodynamic profile. Thus, in some embodiments, the rotor blade 16 may define an airfoil shaped cross-section. For example, the rotor blade 16 may also be aeroelastically tailored. Aeroelastic tailoring of the rotor blade 16 may entail bending the blade 16 in generally a chordwise direction x and/or in a generally spanwise direction z. As illustrated, the chordwise direction x generally corresponds to a direction parallel to the chord 34 defined between the leading edge 28 and the trailing edge 30 of the rotor blade 16. Additionally, the spanwise direction z generally corresponds to a direction parallel to the span 32 of the rotor blade 16. In some embodiments, aeroelastic tailoring of the rotor blade 16 may additionally or alternatively comprise twisting the rotor blade 16, such as by twisting the rotor blade 16 in generally the chordwise direction x and/or the spanwise direction z.

Referring now additionally to FIG. 3, the rotor blade 16 generally comprises a structural support member 60 and an airfoil structure 50. The structural support member 50 is disposed within the rotor blade 16 and extends for a least a portion of the rotor blade 16 span length 32 (i.e., in the spanwise direction z). The structural support member 60 can comprise any supportive member that is directly or indirectly connected to and supporting the airfoil structure 50 as will become appreciated herein and may comprise one or more different materials.

For example, as illustrated in FIG. 3, in some embodiments the structural support member 60 can comprise a shear web 61 and one or more spar caps 62 (e.g., an upper spar cap 62 and a lower spar cap 62). The shear web 61 and the one or more spar caps 62 may extend for any length of the rotor blade span length 32 sufficient to support the overall wind turbine rotor blade 16. For example, in some embodiments the shear web 61 and the one or more spar caps 62 may extend substantially the entire length of the rotor blade span length 32 from the root 20 to the tip 22. In some embodiments, the shear web 61 and the one or more spar caps 62 may only extend for a portion of the rotor blade span length 32. In even some embodiments, the shear web 61 and the one or more spar caps 62 may extend for different lengths independent of one another such as when the spar caps 62 extend for a length beyond the shear web 61 towards the tip 22. Moreover, while embodiments comprising the shear web 61 and one or more spar caps 62 have been presented herein, it should be appreciated that other embodiments may also be provided for structural support members 60 such as comprising only one of these elements and/or comprising additional elements not already described herein.

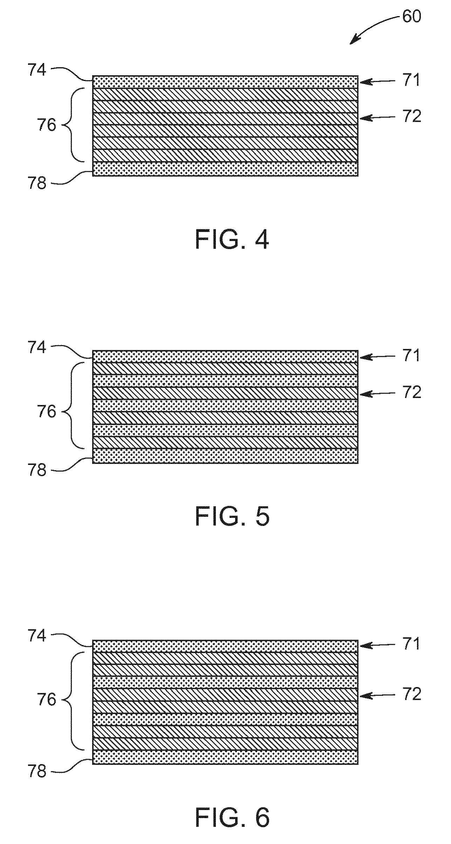

Referring now additionally to FIGS. 4-7, at least a portion of the structural support member 60 can generally comprise a plurality of fiber reinforcing layers 70 positioned (e.g., disposed, stacked or otherwise layered) on top of one another. The structural support member 60 can further comprise a resin infused throughout the plurality of fiber reinforcing layers 70 to form a support piece for the airfoil structure 50. The structural support member 60 comprising the plurality of fiber reinforcing layers 70 can comprise one or more spar caps 62, the shear web 61, combinations thereof, or any other components embodying the structural support member 60. Moreover, the combination of fiber reinforcing layers 70 may be tailored to the specific structural support member 60, its location along the rotor blade 16. In some embodiments, the entire length of the structural support member 60 may comprise fiber reinforcing layers 70 comprising different areal weights. In other embodiments, only one or more portions of the structural support member 60 may comprise fiber reinforcing layers 70 of different areal weights whereas other portions of the structural support member 60 may comprise fiber reinforcing layers 70 of the same areal weight.

Specifically, the plurality of fiber reinforcing layers 70 can comprise a plurality of intermediate fiber reinforcing layers 76 disposed between a top fiber reinforcing layer 74 and a bottom fiber reinforcing layer 78. Moreover, the plurality of fiber reinforcing layers 70 can comprise a plurality of different areal weights (i.e., mass per unit area for the individual fiber reinforcing layers 70), wherein at least one of said fiber reinforcing layers comprises a first areal weight and wherein at least one of said fiber reinforcing layers comprises a second areal weight different than the first areal weight. Fiber reinforcing layers 70 comprising greater areal weights may provide additional strength and/or rigidity to the overall structural support member 60. However, fiber reinforcing layers 70 comprising lower areal weights may facilitate a faster resin infusion process by providing a less dense passage for resin flow and/or may provide greater flexibility to the structural support member 60. Overall, by incorporating different fiber reinforcing layers 70 comprising different areal weights, at least various combinations of strength and resin infusibility may be realized in structural support members 60 for wind turbine rotor blades 16. In some embodiments, the entire length of the structural support member 60 may comprise fiber reinforcing layers 70 comprising different areal weights. In other embodiments, only one or more portions of the structural support member 60 may comprise fiber reinforcing layers 70 of different areal weights whereas other portions of the structural support member 60 may comprise fiber reinforcing layers 70 of the same areal weight.

For example, at least a first fiber reinforcing layer 71 may comprise a first areal weight and at least a second fiber reinforcing layer 72 may comprise a second areal weight different than the first areal weight. In even some embodiments, the plurality of fiber reinforcing layers 70 may comprise even more different areal weights such as at least a third fiber reinforcing layer 73 comprising a third different areal weight or even additional fiber reinforcing layers 70 comprising additional different areal weights. The specific areal weights of the respective fiber reinforcing layers 70, the ratios of the areal weights, and other parameters may be varied so long as the structural support member 60 comprises at least a first fiber reinforcing layer 71 having a first areal weight and at least a second fiber reinforcing layer 72 having a second areal weight different than the first areal weight.

In some embodiments, from about 10 percent to about 90 percent of the plurality of fiber reinforcing layers 70 may comprise the first areal weight. Likewise, from about 90 percent to about 10 percent of the plurality of fiber reinforcing layers 70 may comprise the second areal weight. In some embodiments, from about 25 percent to about 75 percent of the plurality of fiber reinforcing layers 70 may comprise the first areal weight. Likewise, from about 75 percent to about 25 percent of the plurality of fiber reinforcing layers 70 may comprise the second areal weight. In some embodiments, from about 40 percent to about 60 percent of the plurality of fiber reinforcing layers 70 may comprise the first areal weight. Likewise, from about 60 percent to about 40 percent of the plurality of fiber reinforcing layers 70 may comprise the second areal weight.

In some embodiments, the first areal weight may comprise at least about 1800 g/m². In some embodiments, the second areal weight may comprise at least about 1000 g/m². However, in some embodiments, the first areal weight and/or the second areal weight may comprise even greater or lesser areal weights. For example, one or more of the plurality of fiber reinforcing layers 70 may comprise at least about 2400 g/m². In even some embodiments, one or more of the plurality of fiber reinforcing layers 70 may comprise at least about 3200 g/m². Moreover, while specific weights and ratios have been disclosed herein, it should be appreciated that these are exemplary only and non-limiting embodiments. For example, in even some embodiments, the structural support member 60 may comprise one or more fiber reinforcing layers 70 having a third different areal weight or any greater number of different areal weights.

The plurality of fiber reinforcing layers 70 comprising two or more different areal weights may thereby comprise a variety of different configurations (e.g., layering orders). For example, is illustrated in FIG. 4, in some embodiments, the top fiber reinforcing layer 74 and the bottom fiber reinforcing layer 78 may comprise the first areal weight. Moreover, at least one of the plurality of intermediate fiber reinforcing layers 76 may comprise the second areal weight. In such embodiments, the first areal weight may be greater than the second areal weight such that the top fiber reinforcing layer 74 and the bottom fiber reinforcing layer 78 comprise stronger materials, while at least one of the plurality of intermediate fiber reinforcing layers 76 provide greater resin infusibility. In even some of these embodiments, all of the intermediate fiber reinforcing layers may comprise the second areal weight or at least an areal weight different than the first areal weight.

Referring now to FIG. 5, in some embodiments, the plurality of fiber reinforcing layers 70 may substantially alternate between the first areal weight and the second areal weight. For example, the top fiber reinforcing layer 74 and the bottom fiber reinforcing layer 78 may comprise the first areal weight and the intermediate fiber reinforcing layers 76 may alternative between the first areal weight and the second areal weight. Alternating may comprise a 1:1 iteration of first and second areal weights as illustrated in FIG. 5, or may comprise another alternating pattern that provides periodic iterations between the first areal weight and the second areal weight.

For example, as illustrated in FIG. 6, the plurality of fiber reinforcing layers 70 may comprise a 2:1 iteration of first and second areal weights. Specifically, two fiber reinforcing layers 72 comprising the second areal weight may be followed by a single fiber reinforcing layer 71 comprising the first areal weight. Such a pattern may repeat throughout the entire structural support member 60 or just a portion of the structural support member 60. Additionally or alternatively, other more varied or complex iterations of fiber reinforcing layers 70 comprising different areal weights may be utilized in the structural support member 60.

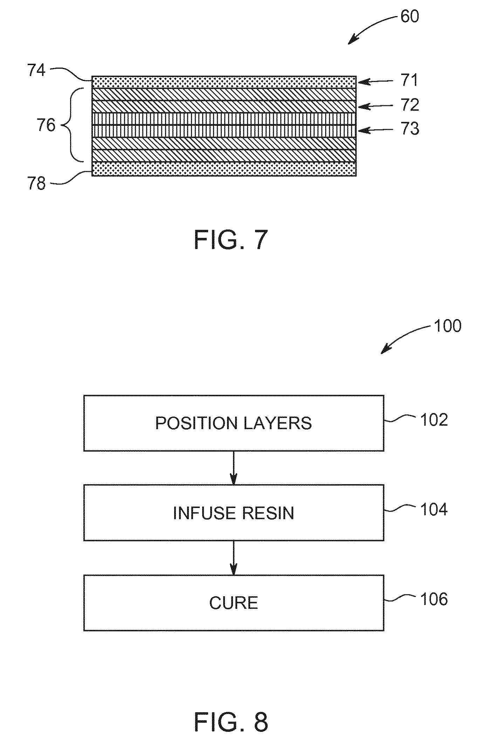

Referring now to FIG. 7, in even some embodiments, the plurality of fiber reinforcing layers 70 may comprise more than two different areal weights. For example, the plurality of fiber reinforcing layers 70 can comprise one or more first fiber reinforcing layers 71 comprising a first areal weight, one or more second fiber reinforcing layers 72 comprising a second areal weight, and one or more third fiber reinforcing layers 73 comprising a third areal weight. The first, second and third areal weight's may be different such that each respective fiber reinforcing layers 71, 72 and 73 con contribute, for example, a specific balance of resin infusibility and mechanical performance. It should also be appreciated that the plurality of fiber reinforcing layers 70 are not limited to just two or three different areal weights, but rather can comprise any amount of different areal weights amongst the plurality of fiber reinforcing layers 70.

The structural support member 60 comprising the plurality of fiber reinforcing layers 70 can further comprise a plurality of other features or configurations. For example, in some embodiments, the alignment of the fibers in the fiber reinforcing layers may be controlled. Specifically, in some embodiments, some or all of the plurality of fiber reinforcing layers 70 can comprise unidirectional fiber reinforcing layers 70. Unidirectional fiber reinforcing layers 70 comprise fiber reinforcing layers where all or substantially all of the fibers are oriented in a common direction. In even some of these embodiments, the unidirectional fiber reinforcing layers 70 may be substantially oriented in a common direction. For example, the unidirectional fiber reinforcing layers 70 may be oriented in the spanwise direction z of the rotor blade 16.

In even some embodiments, the structural support member 60 may be tailored with respect to the position along the rotor blade span length 32. For example, the amount of fiber reinforcing layers 70 comprising the first areal weight and the amount of fiber reinforcing layers 70 comprising the second areal weight may change along the rotor blade span length 32. In some of these embodiments, the first areal weight may be greater than the second areal weight and a higher proportion of fiber reinforcing layers 70 comprise the first areal weight proximate the root 20 of the wind turbine rotor blade 16 than proximate the tip 22 of the wind turbine rotor blade 16. Such embodiments may allow for greater strength towards the root 20 of the wind turbine rotor blade 16 while potentially reducing material or production costs at other portions of the wind turbine rotor blade 16. In even some embodiments, the highest proportion of fiber reinforcing layers 70 comprising the greater areal weight may be disposed at or around the position along the wind turbine rotor blade 16 comprising the max chord length (i.e., greatest length in the chordwise direction x). For example, if the first areal weight is greater than the second areal weight, the structural support member 60 (e.g., spar cap 62) may comprise a higher proportion of fiber reinforcing layers comprising the first areal weight proximate a max chord length of the wind turbine rotor blade than a position distal the max chord length of the wind turbine rotor blade.

The plurality of fiber reinforcing layers 70 may thereby be disposed in a plurality of different configurations incorporating fiber reinforcing layers 70 of at least two different areal weights. In some embodiments, one or more of these fiber reinforcing layers 70 may comprise fiber glass. In such embodiments, the structural support member 60 can comprise at least one shear web 61 connected to at least one spar cap 62. For example, the structural support member 60 may comprise two spar caps 62 connected by a shear web 61 such as in an I-beam configuration, or may comprise two spar caps 62 connected by two shear webs 61 such as in a box-configuration. The shear web 61 and the spar cap 62 may extend for any length of the rotor blade 16 span length 32 from the root 20 to the tip 22. In some embodiments, one or more of these fiber reinforcing layers 70 may comprise carbon fiber. In such embodiments, the structural support member 60 may comprise a single spar body (i.e., without separate spar cap and shear web elements) that comprises the carbon fiber material, such as in a box configuration. While embodiments comprising the single spar body have been presented herein, it should be appreciated that other embodiments may also be provided for structural support members 60 comprising carbon fiber such as comprising an upper spar cap, a lower spar cap and/or additional elements not already described herein.

Moreover, one or more resins may be infused throughout the fiber reinforcing layers 70 and subsequently cured. For example, in some embodiments, incumbent resins may be utilized as the fiber reinforcing layers 70 comprising the lower weight may also facilitate faster resin infusion such that there is little to no premature of curing of the incumbent resin as may occur if only heavier fiber reinforcing layers 70 were utilized. In some embodiments, steerable resins may additionally or alternatively be utilized to further control curing by requiring a change in temperature before curing occurs.

Referring back to FIGS. 1-3, the structural support member 60 comprising the plurality of fiber reinforcing layers 70 can be utilized to at least partially support an airfoil structure 50. The airfoil structure 50 at least partially supported by the structural support member 60 can comprise an aerodynamic profile comprising the leading edge 28 opposite the trailing edge 30 and the pressure side 24 opposite the suction side 26. The airfoil structure may comprise any material or materials that facilitate the capturing of incoming wind. Moreover, by utilizing the plurality of fiber reinforcing layers 70 comprising different areal weights in the structural support member 60, heavier or different airfoil structures 50 may be utilized with no or limited effect on manufacturing considerations when infusing and curing the structural support member 60 to accommodate such airfoil structures 50.

Referring now additionally to FIG. 8, an exemplary method 100 is illustrated for manufacturing a structural support member 60 such as a spar cap 62 for a wind turbine rotor blade 16. The method 100 can first comprise positioning a plurality of fiber reinforcing layers 70 on top of one another in step 102, wherein a plurality of intermediate fiber reinforcing layers 76 are disposed between a top fiber reinforcing layer 74 and a bottom fiber reinforcing layer 78, and wherein at least one of said fiber reinforcing layers comprises a first areal weight, and wherein at least one of said fiber reinforcing layers comprises a second areal weight different than the first areal weight. The method 100 can subsequently and/or simultaneously comprise infusing a resin in step 104 throughout the plurality of fiber reinforcing layers 70. Infusing the resin may be accomplished through any suitable technique such as pulling a vacuum around the plurality of fiber reinforcing layers 70 to distribute the resin therein. In some embodiments, such as depending on the type of resin utilized, the method 100 may further comprise a separate curing action in step 106 such as by applying an elevated temperature to all or part of the plurality of fiber reinforcing layers 70. It should further be appreciated that method 100 may be utilized for any variety of configurations of fiber reinforcing layers 70 comprising different areal weights including those described and illustrated herein.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following by numbered clauses:
1. A structural support member for a wind turbine rotor blade, the structural support member comprising:
   a plurality of fiber reinforcing layers positioned on top of one another, wherein a plurality of intermediate fiber reinforcing layers are disposed between a top fiber reinforcing layer and a bottom fiber reinforcing layer, and wherein at least one of said fiber reinforcing layers comprises a first areal weight, and wherein at least one of said fiber reinforcing layers comprises a second areal weight different than the first areal weight; and,
   a resin infused throughout the plurality of fiber reinforcing layers.
2. The structural support member of clause 1, wherein the top fiber reinforcing layer and the bottom fiber reinforcing layer comprise the first areal weight and at least one of the plurality of intermediate fiber reinforcing layers comprise the second areal weight.
3. The structural support member of any preceding clause, wherein the first areal weight is greater than the second areal weight.
4. The structural support member of any preceding clause, wherein from about 25 percent to about 75 percent of the plurality of fiber reinforcing layers comprise the first areal weight and wherein from about 75 percent to about 25 percent of the plurality of fiber reinforcing layers comprise the second areal weight.
5. The structural support member of any preceding clause, wherein the plurality of intermediate fiber reinforcing layers substantially alternate between the first areal weight and the second areal weight.
6. The structural support member of any preceding clause, wherein all of the plurality of fiber reinforcing layers comprise unidirectional fiber reinforcing layers substantially oriented in a common direction.
7. The structural support member of any preceding clause, wherein the plurality of fiber reinforcing layers comprise fiberglass.
8. The structural support member of any preceding clause, wherein the first areal weight is at least about 1800 g/m² and the second areal weight is at least about 1000 g/m².
9. The structural support member of any preceding clause, wherein at least one of said fiber reinforcing layers comprises a third areal weight different than the first areal weight and the second areal weight.
10. A wind turbine rotor blade comprising:
   a spar cap disposed within the rotor blade that extends for at least a portion of a rotor blade span length, at least a portion of the spar cap comprising:
      a plurality of fiber reinforcing layers positioned on top of one another, wherein a plurality of intermediate fiber reinforcing layers are disposed between a top fiber reinforcing layer and a bottom fiber reinforcing layer, and wherein at least one of said fiber reinforcing layers comprises a first areal weight, and wherein at least one of said fiber reinforcing layers comprises a second areal weight different than the first areal weight; and,
      a resin infused throughout the plurality of fiber reinforcing layers; and,
      an airfoil structure at least partially supported by the spar cap.
11. The wind turbine rotor blade of any preceding clause, wherein the amount of fiber reinforcing layers comprising the first areal weight and the amount of fiber reinforcing layers comprising the second areal weight changes along the rotor blade span length.
12. The wind turbine rotor blade of any preceding clause, wherein the first areal weight is greater than the second areal weight, and wherein a higher proportion of fiber reinforcing layers comprise the first areal weight proximate a root of the wind turbine rotor blade than proximate a tip of the wind turbine rotor blade.
13. The wind turbine rotor blade of any preceding clause, wherein the first areal weight is greater than the second areal weight, and wherein a higher proportion of fiber reinforcing layers comprise the first areal weight proximate a max chord length of the wind turbine rotor blade than a position distal the max chord length of the wind turbine rotor blade
14. The wind turbine rotor blade of any preceding clause, wherein the top fiber reinforcing layer and the bottom fiber reinforcing layer comprise the first areal weight and at least one of the plurality of intermediate fiber reinforcing layers comprise the second areal weight.
15. The wind turbine rotor blade of any preceding clause, wherein the first areal weight is greater than the second areal weight.
16. The wind turbine rotor blade of any preceding clause, wherein all of the plurality of fiber reinforcing layers comprise unidirectional fiber reinforcing layers substantially oriented in a common direction.
17. The wind turbine rotor blade of any preceding clause, wherein the plurality of fiber reinforcing layers comprise fiberglass.
18. The wind turbine rotor blade of any preceding clause, wherein at least one of said fiber reinforcing layers comprises a third areal weight different than the first areal weight and the second areal weight.
19. A method for manufacturing a structural support member, the method comprising:
   positioning a plurality of fiber reinforcing layers on top of one another,
      wherein a plurality of intermediate fiber reinforcing layers are disposed between a top fiber reinforcing layer and a bottom fiber reinforcing layer, and wherein at least one of said fiber reinforcing layers comprises a first areal weight, and wherein at least one of said fiber reinforcing layers comprises a second areal weight different than the first areal weight; and,
   infusing a resin throughout the plurality of fiber reinforcing layers.
20. The method of any preceding clause, wherein the structural support member is a spar cap for a wind turbine rotor blade.

## Claims

1. A structural support member (60) for a wind turbine rotor blade (16), the structural support member (60) comprising:
a plurality of fiber reinforcing layers (76) positioned on top of one another, wherein a plurality of intermediate fiber reinforcing layers (76) are disposed between a top fiber reinforcing layer and a bottom fiber reinforcing layer, and wherein at least one of said fiber reinforcing layers (76) comprises a first areal weight, and wherein at least one of said fiber reinforcing layers comprises a second areal weight different than the first areal weight; and
a resin infused throughout the plurality of fiber reinforcing layers (76).

2. The structural support member (60) of claim 1, wherein the top fiber reinforcing layer and the bottom fiber reinforcing layer comprise the first areal weight and at least one of the plurality of intermediate fiber reinforcing layers (76) comprise the second areal weight.

3. The structural support member (60) of claim 2, wherein the first areal weight is greater than the second areal weight.

4. The structural support member (60) of any preceding claim, wherein from about 25 percent to about 75 percent of the plurality of fiber reinforcing layers (76) comprise the first areal weight and wherein from about 75 percent to about 25 percent of the plurality of fiber reinforcing layers comprise the second areal weight.

5. The structural support member (60) of any preceding claim, wherein the plurality of intermediate fiber reinforcing layers (76) substantially alternate between the first areal weight and the second areal weight.

6. The structural support member (60) of any preceding claim, wherein all of the plurality of fiber reinforcing layers (76) comprise unidirectional fiber reinforcing layers substantially oriented in a common direction.

7. The structural support member (60) of any preceding claim, wherein the plurality of fiber reinforcing layers (76) comprise fiberglass.

8. The structural support member (60) of any preceding claim, wherein the first areal weight is at least about 1800 g/m² and the second areal weight is at least about 1000 g/m².

9. The structural support member (60) of any preceding claim, wherein at least one of said fiber reinforcing layers (76) comprises a third areal weight different than the first areal weight and the second areal weight.

10. A wind turbine rotor blade (16) comprising:
a spar cap (62) disposed within the rotor blade that extends for at least a portion of a rotor blade span length, at least a portion of the spar cap comprising:
a plurality of fiber reinforcing layers (76) positioned on top of one another, wherein a plurality of intermediate fiber reinforcing layers are disposed between a top fiber reinforcing layer and a bottom fiber reinforcing layer, and wherein at least one of said fiber reinforcing layers comprises a first areal weight, and wherein at least one of said fiber reinforcing layers comprises a second areal weight different than the first areal weight; and,
a resin infused throughout the plurality of fiber reinforcing layers (76); and
an airfoil structure (50) at least partially supported by the spar cap (62).

11. The wind turbine rotor blade (16) of claim 10, wherein the amount of fiber reinforcing layers (76) comprising the first areal weight and the amount of fiber reinforcing layers comprising the second areal weight changes along the rotor blade span length.

12. The wind turbine rotor blade (16) of claim 10 or claim 11, wherein the first areal weight is greater than the second areal weight, and wherein a higher proportion of fiber reinforcing layers comprise the first areal weight proximate a root of the wind turbine rotor blade than proximate a tip of the wind turbine rotor blade (16).

13. The wind turbine rotor blade (16) of any of claims 10 to 12, wherein the first areal weight is greater than the second areal weight, and wherein a higher proportion of fiber reinforcing layers (76) comprise the first areal weight proximate a max chord length of the wind turbine rotor blade than a position distal the max chord length of the wind turbine rotor blade

14. The wind turbine rotor blade (16) of any of claims 10 to 13, wherein the top fiber reinforcing layer and the bottom fiber reinforcing layer comprise the first areal weight and at least one of the plurality of intermediate fiber reinforcing layers comprise the second areal weight.

15. A method for manufacturing a structural support member (60), the method comprising:
positioning a plurality of fiber reinforcing layers (76) on top of one another,
wherein a plurality of intermediate fiber reinforcing layers are disposed between a top fiber reinforcing layer and a bottom fiber reinforcing layer, and wherein at least one of said fiber reinforcing layers comprises a first areal weight, and wherein at least one of said fiber reinforcing layers (76) comprises a second areal weight different than the first areal weight; and
infusing a resin throughout the plurality of fiber reinforcing layers (76).
